# EUROPÄISCHE PATENTSCHRIFT

(11) **EP 0 787 899 B1**
(45) Veröffentlichungstag und Bekanntmachung des Hinweises auf die Patenterteilung: **16.05.2001**
(21) Anmeldenummer: 97200077.2
(22) Anmeldetag: 17.01.1997
(51) Int. Cl.: F02M 21/02, G05D 7/06

(54) **Geräte zur Regelung des Durchflusses eines Fluidums**
Device for controlling the flow of a fluid
Dispositif de contrôle du débit d'un fluide

(30) Priorität: 30.01.1996 NL 1002207
(43) Veröffentlichungstag der Anmeldung: 06.08.1997
(73) Patentinhaber: Van Boxel, Rudolphus Adrianus Jeanne Marie, NL-5103 BA Dongen (N.B.) (NL); Girelli, Renata, 5103 BA Dongen (NL)
(72) Erfinder: Van Boxel, Rudolphus Adrianus Jeanne Marie, NL-5103 BA Dongen (N.B.) (NL); Girelli, Renata, 5103 BA Dongen (NL)

(56) Entgegenhaltungen:
- EP-A- 0 046 431
- FR-A- 2 206 445
- GB-A- 2 285 672
- US-A- 4 545 561
- MARINESCU: "Low dead volume piezoelectric valve" REVIEW OF SCIENTIFIC INSTRUMENTS, Bd. 61, Nr. 6, 1.Juni 1990, NEW YORK, Seiten 1749-1750, XP000166162
- PATENT ABSTRACTS OF JAPAN vol. 9, no. 273 (P-401), 30.Oktober 1985 & JP 60 118915 A (MITSUBISHI), 26.Juni 1985,
- PATENT ABSTRACTS OF JAPAN vol. 12, no. 83 (M-677), 16.März 1988 & JP 62 224780 A (HITACHI), 2.Oktober 1987,

## Beschreibung

Die Erfindung bestrifft ein Gerät zur Regelung des Durchflusses eines Fluidums zwecks Dosierung desselben in eine Vorrichtung.

Das Gerät besteht aus einem die Zufuhr regelnden Ventil aus Metall, welches elekrisch gesteuert wirt, mit Anschluss an einen Zufuhrstutzen.

Vorrichtungen zum Zwecke des Einspritzens eines gasförmigen Brennstoffgemisches, wie zum Beispiel in den Hubraum eines Kolbenmotors, welche ein Ventil zur Regelung des Druckes enthalten, sind bekannt.

Derartige Vorrichtungen sind in den Niederländischen Patentanmeldungen 90 00 786 und 90 02 862 beschrieben.

Die darin vorgesehenen mechanischen und elektromagnetischen Lenkungen sind jedoch für verschiedene Anwendungsbereiche nicht optimal geeignet, weil sie eine gewisse Trägheit besitzen und weil sie nicht mit hinreichender Genauigkeit gesteuert werden können,wie dies bezüglich der Parameter und der oberen und unteren Grenzwerte der Bestandteile eines Gemisches für einen optimalen Betrieb gefordert werden kann. Diese und andere bestrieblichen Nachteile werden mittels der erfindunggemässen Kontruktion behobe.

US-A-4545561 offenbart eine Vorrichtung zur Regelung des Durchflusses von gasförmigem Fluidum (zum Zwecke der Dosierung), bestehend aus einem die Zufuhr regelnden und drosselnden Ventil mit einer Steuerung, deren Parameter festgeledt sind, mit Anschluß an einen Zufuhrstutzen (44) wobei das Ventil aus einem zylindrischen Gehause (20) mit Gewindestutzen (44, 50) besteht welches anschließend an die Zufuhr einen inneren Stutzen umfaßt, auf dessen offenen Ende (42) eine kreisförmige Membranscheibe (16) aus biegbarem Metall gelagert ist und wobei auf der kreisförmigen Membranscheibe (16) ein flacher Körper (14) angebracht ist, welcher durch piezoelektrische Impulse bewegt wird von einer flachen Lage in eine gewölbte Lage, indem elektrische Leiter (52, 54) von einem Spannungserzeuger daran befestigt sind, die durch eingegebene Spannungsdifferenzen eine konkave Biegung der Membranscheibe (16) erzeugen, so daß durch diese Biegung ein Spalt entsteht, welcher einem Regelprogramm entsprechend variierbar ist, und folglich der Durchlaß des durch den Stutzen eingeführten Fluidums in gleicher weise dem Regelprogramm unterworfen ist.

Die Membran dieser Vorrichtung ist zwischen zwei Gehäuseteilen eingespannt.

Mit der vorliegenden Erfindung wird bezweckt, eine Armatur zu beschaffen, welche diese Nachteile nicht besitzt und ausserdem vielseitiger verwendet werden kann.

Das Gerät für das regelnde Dosieren eines strömungsfähigen Stoffes, das eine Drosselklappe mit Steuerung und einen Eingangs - und Ausgangsstutzen besitzt, weist erfindungsgemäss ein die Zufuhr regelndes und drosselndes Ventil und eine Steuerung, deren Parameter festgelegt sind auf, wobei das Ventil aus einem zylindrischen Gehäuse besteht, mit einem Fluidumeinlass an einem Ende dieses Gehäuses (1) und einem Innengewinde (2) am anderen Ende das mit einem an einem Ende eines inneren Gehäuseteils angebrachten Aussengewinde so zusammengebaut ist, dass zwischen Gehäuse (1) und innerem Gehäuseteil ein radialer mit dem Fluidumeinlass verbundener Spalt entsteht, wobei das innere Gahäuseteil, angrenzend an den Spalt, eine umlaufende Rinne aufweist die um einen zentralen Stutzen angeordnet ist der eine Spindel (6) und eine um die Spindel (6) gelegte zylindrische Druckfeder (7) enthalt, wobei auf dem offenen Ende der Rinne eine kreisförmige Membranscheibe (3) aus biegsamen Metall mit daran befestigter Spindel (6) rundum gelagert ist, wobei der Aussenrand der Membranscheibe (3) mit Abstand von der Innenseite des Gehäuses (1) angeordnet ist und wobei auf der kreisfömigen Membanscheibe (3) ein flacher Körper (4) mit daran befestigten elektrischen Leitern angebracht ist, welcher die Membranscheibe (3) durch piezoelektrische Impulse bewegt sodass durch eingegebene Spannungsdifferenzen eine konkave Biegung der Membranscheibe (3) erzeugt wird und dadurch ein umlaufender Spalt zwischen Oberrand der Rinne und Membranscheibe (3) entsteht, welcher einem Regelprogramm entsprechend variierbar ist und folglich der

Durchlass des durch den Fluidumeinlass eingeführten Fluidums in gleicher Weise dem Regelprogram unterworfen ist. Als piëzoelektrisch wirksames Material des flaschen Körpers, wird eine Schicht aus einem polykristallinen Gemisch von Bleititanat und Bleizirkonat verwendet, das etwa nachfolgender Analyse entspricht:

| | |
|---|---|
| PbO | 66 Gew.% |
| ZrO₂ | 21 Gew.% |
| TiO₂ | 11 Gew.% |
| Lanthanide | 2 Gew.%. |

Die daraus gebildenten Kristalle sind tetragonal und gehen durch Spannungsimpulse in den rhomboëdrischen Zustand über.

Die Eigenschaften eines solchen Materials sind beschrieben in:
van Randeraat und R.G. Seterington, "Piezoelectric Ceramics" (Delft, 1968), und W.G. Cady, "Piezoelectricity" (London, 1964).

Die Schicht wird mit Ethoxylin-polymer (Epoxy-harz) auf die Membranscheibe des Ventils geklebt und mit Elektroden aus Chromnickel oder Silber versehen.

Der piëzoelecktrische Effekt bewirkt, dass in einem elektrischen Feld parallel zur Diagonalen de Membranscheibe eine inverse Formänderung durch eine radial wirkende kraft (Elektrostriktion) erzeugt wird infolge des Uebergangs in den kubischen Kristalltypus.

Das Oberflächenfeld der Kristallschicht wird dabei einer Polarisierung in die Axiale Richtung der Scheibe unterzogen. Wenn das elektrische Feld verschwindet, wird die Polarisierung aufgehoben und nimmt die Membranscheibe wieder ihre ursprüngliche flache Gestalt an, sodass dann die Zufuhr des Fluidums wieder unterbrochen wird.

Die Stärke der Polarisierung ist dem Wert der Spannung proportional, sodass es möglich ist, die Einstellung der Membranscheibe genau zu regeln, indem die Spaltgrösse durch die Spannungsänderung variabel beeinflusst wird. (Δ h=c.U ^{mm/}V) Die Konstruktion des erfindungsgemässen Dosierorgangs wird an Hand der beigefügten Zeichnungen erläutert.

Die Zeichnungen beziehen sich auf ein Ventil zum Dosieren von strömungsfähingen Medien, wie Gase, Gasgemische, Dämpfe und ähnliche Fluide.

Diese Ausführung ist ein Beispiel der Anwendung des erfindungsgemässen Gedankens,doch die Erfindung ist nicht auf dieses Beispiel beschränkt.

Dimensionale Aenderungen und Anspassungen der abgebildeten Teile an das Aenwendungsgebiet sind möglich.

In den Abbildungen sind übereinstimmende Positionen mit identischen Positionsnummern versehen.

Figur 1 zeigt ein teilweise offengelegtes Bild einer erfindungsgemässen Ventilvorrichtung.

Figur 2 zeigt einer Längsschnitt derselben.

In diesen Abbildungen sind die folgenden Positionen bezeichnet:
1 ist das Gehäuse mit inneren Gewinde 2 für den Einbau, 3 ist die Membranscheibe, 4 ist die Schicht, bestehend aus piëzoelektrischen keramischen Material oder aus elektrodynamisch beeinflussbaren Material, befestigt bei 5 mit Epoxyharz, mit Spindel 6 und zylindrischer Druckfeder 7, und Bolzen 8.

Die Zeichnungen zeigen das Gerät zur Anwendung in Verbrennungsmotoren für Kraftfährzeuge, als Puls-Unterbrecher für ein aus flüssigem Fluidum verdampftes Gas (LPG).

Aehnliche Ausführungsformen für andere Anwendungen gehören gleichfalls zur vorgelegten Erfindung.

Derartige Ventile Können zur Dosierung von Gasen und Dämpfen vorteilhaft erwendet werden, z.B. in Gasgeräten zur Wärmeerzeugung, für Beleuchtungszwecke, in der Chemie-Industrie und für Narkose-Garäte.

Das Programm, welches für Kraftfahrzeuge eingesetzt wird, ist ein sogenanntes Nachfolge-Menu (Abhängigkeit von Leistungs signalen des Motors), verbunden mit der Mikro-Elektronik der Zündungsschaltung. Dieses Steuerungssystem verwendet ausschliesslich Injektor-Steuerungssignale des im Fahrzeug eingebauten digitalen Reglers, angepasst an Oktanahl, Drehzahl, Temperatur und Zylinderzyklus.

Die Steuerung findet kontinuierlich über die Elektroden an de Membranscheibe statt. Die Angaben werden so verarbeitet, dass zum Beispiel bei LPG ein optimales Resultat erreicht werden kann, weil das Regulierungssystem mit hoher Präzision funktioniert. Die Spezifikationen des Fahrzeugherstellers werden dabei eingehalten.

Ein solches System für die Zufuhr von Gasgemichen umfasst einen Mikro-Controller (für variablen C-Wert), galvanisch gentrennte Ein-und Ausgangskreise, interne

Spannungs-und Bewachungskreise, Signalierungs- und Diagnosekreise und eine Regler-und Steuerungs-Einheit.

Ueber die Eingangskreise werden die angebotenen Signale durch den variablen C-Wert überrwacht, kontroliert und vararbeitet, um schliesslich das Organ der Gasregelung an zu steuern.

Beschrieben ist ein Beispiel, auf welches die Erfindung nicht beschänkt ist.

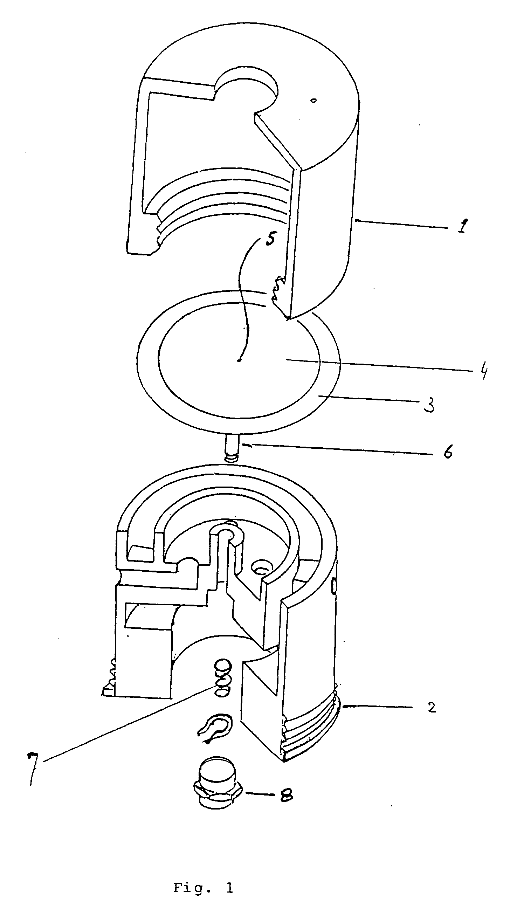

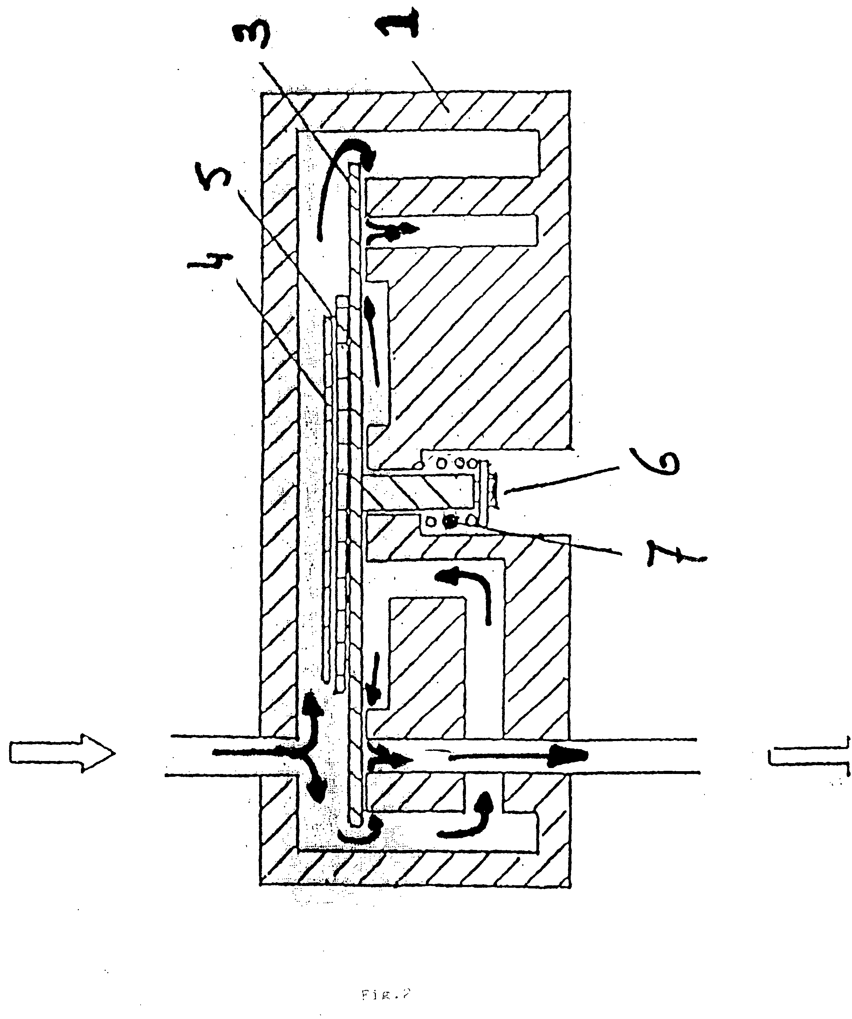

Die figuren 1 und 2 zeigen die wesentlichen Teile.

## Patentansprüche

1. Vorrichtung zur Regelung des Durchflusses von gasförmigen Fluidum zum Zwecke der Dosierung mit einem die Zufuhr regelnden und drosselnden Ventil und einer Steuerung, deren Parameter festgelegt sind, wobei das Ventil aus einem zylindrischen Gehäuse (1) besteht, mit einem Fluidumeinlass an einem Ende dieses Gahäuses (1) und einem Innengewinde (2) am anderen Ende das mit einem an einem Ende eines inneren Gehäuseteils angebrachten Aussengewinde so zusammengebaut ist, dass zwischen Gehäuse (1) und innerem Gehäuseteil ein radialer mit dem Fluidumeinlass verbundener Spalt entsteht, wobei das innere Gehäuseteil angrenzend an den Spalt, eine umlaufende Rinne aufweist die um einen zentralen Stulzen angeordnet ist der eine Spindel (6) und eine um die Spindel (6) gelegte zylindrische Druckfeder (7) enthält, wobei auf dem offenen Ende der Rinne eine kreisförmige Membranscheibe (3) aus biegsamen Metall mit daran befestigter Spinde (6) rundum gelagert ist, wobei der Aussenrand der Membranscheibe (3) mit Abstand von der Innenseite des Gahäuses (1) angeordnet ist und wobei auf der kreisförmigen Membranscheibe (3) ein flacher Körper (4) mit daran befestigten elektrischen Leitern angebracht ist, welcher die Membranscheibe (3) durch piezoelektrische Impulse bewegt sodass durch eingegebene Spannungsdifferenzen eine konkave Biegung der Membranscheibe (3) erzeugt wird und dadurch ein umlaufender Spalt zwischen Oberrand der Rinne und Membranscheibe (3) entsteht, welcher einem Regelprogramm entsprechend variierbar ist und folglich der Durchlass des durch den Fluidumeinlass eingeführten Fluidums in gleicher Weise dem Regelprogram unterworfen ist.

2. Vorrichtung nach Anspruch 1, **dadurch gekennzeichnet**, dass das piëzoelektrische Material des flachen Korpers (4) aus einem keramischen Kristallgemisch von Bleititanat und Bleizirkonat mit 2 Gew.% Lanthaniden besteht, welches Kristallgemisch durch angelegte Spannung in eine Formänderung übergeht.

3. Vorrichtung nach Anspruch 1 und 2, **dadurch gekennzeichnet**, dass der flache körper (4) mittels Epoxyharz auf der Membranscheibe festgeklebt ist.

4. Dosiergerät für ein Kraftstoffgemisch, welches eingesetzt wird für Kraftfährzeugmotoren, **gekennzeichnet** durch ein oder mehrere Vorrichtungen gemäss Ansprüchen 1-3.

5. Steuervorrichtung für Verbrennungsmotoren, **gekennzeichnet** durch eine Ventilvorrichtung am Hubraum des Zylinders met Vorrichtungen gemäss Ansprüchen 1-3.

## Claims

1. Device for controlling the flow of gaseous fluids meant for administering and constructed of a controllable valve for administering and reducing the stream. Its parameters are fixed and it is connected to a supply support. The valve is characterised by existing out of a cylindrical housing 1 with tapped end 2. The valve encloses the supply with an internal support. This support has an open end with a circular membrane disc 3, constructed from pliable metal. Attached to the support is a spindle 6, around which is mounted a cylindrical pressure spring. Mounted on the membrane disc is a solenoid flat object 4. Piezo-electric and/or electrical impulses can change the shape of this object from flat into curved by attaching an electrical conductor from a voltage generator. Because of this voltage difference the membrane disc will start making concave movements. This movement of the membrane disc will cause the appearance of an opening. The size of this opening can be controlled by the control program and has effect on the flow of the amount of fluid that is administered through the support.

2. Device build following demands 1, which is characterised by the following: The piezo-electrical material consists of a ceramic crystal mixture of lead titanate and lead zirconate with 2 per cent (mass) lanthanide. This mixture will tend to change shapes as a result of voltage being put on.

3. Device build following demands 1 and 2, which is characterised by the following: The control material is attached to the membrane disc with epoxy resin.

4. Dosing device for a fluid, which is used motor engines and anaesthesia and similar applications. The device is characterised by the one or several valves meeting the demands of 1 - 3.

5. Control for internal-combustion engines, characterised by a valve device at the piston displacement of the cylinder with a valve meeting the demands of 1 - 3.

## Revendications

1. Dispositif de contrôle de la circulation des fluides gazeux, destiné à l'alimentation, élaboré avec une valve de contrôle d'alimentation et de réduction du flot. Ses paramètres sont fixes et il est relié à un mécanisme d'alimentation. La valve est abritée dans la gaine cylindrique 1 avec l'embout 2. La valve renferme l'alimentation avec un mécanisme interne. Ce mécanisme dispose d'un embout ouvert avec la membrane circulaire disque 3, fait de métal souple. La colonne 6 est attachée au mécanisme, autour duquel est monté un ressort de compression cylindrique. La pièce plate solénoïde 4 est assemblée sur la membrane circulaire. Les pulsions électriques et/ou piézoélectriques peuvent infléchir cette pièce plate en attachant un conducteur électrique à partir d'un générateur de voltage. En raison de ces variations de voltage, la membrane circulaire commencera à se creuser. Le mouvement du disque membrane formera une ouverture, dont la taille est contrôlable à l'aide du programme de contrôle, agissant sur le flot et le volume du fluide dispensé par le mécanisme.

2. Dispositif conçu pour répondre aux applications 1, caractérisé par les facteurs suivants: le matériel du piézo-électrique consiste en une céramique cristal à base de plomb titanate et de plomb zirconite avec 2 pour cent (masse) lanthanide. Ce mélange possède la propriété de changer de forme selon le voltage appliqué.

3. Dispositif conçu pour répondre aux applications 1 et 2, caractérisé comme il suit: Le système de contrôle est assemblé à la membrane circulaire à l'aide de résine époxy.

4. Dispositif de dosage du fluide, utilisé dans les moteurs d'automobiles, l'anesthésie et autres applications similaires. Ce dispositif se caractérise par une ou plusieurs valves subordonnées aux applications 1 - 3.

5. Contrôle pour les moteurs à combustion interne, caractérisé par un système de valve sur le piston de déplacement du cylindre avec une valve subordonnée aux applications 1 - 3.
